# EUROPEAN PATENT SPECIFICATION

(11) **EP 3 380 325 B1**
(45) Date of publication and mention of the grant of the patent: **06.10.2021**
(21) Application number: 16819216.9
(22) Date of filing: 23.11.2016
(51) Int. Cl.: B32B 27/08, B32B 27/30, B32B 27/36, B65D 65/40

(54) **COMPOSTABLE PRODUCT PACKAGING**
KOMPOSTIERBARE PRODUKTVERPACKUNG
EMBALLAGE DE PRODUITS COMPOSTABLE

(30) Priority: 25.11.2015 US 201562259882 P; 12.10.2016 US 201615291709
(43) Date of publication of application: 03.10.2018
(60) Divisional application: 21151174.6
(73) Proprietor: Advanced Extrusion, Inc., Rogers, Minnesota 55374 (US)
(72) Inventor: THIBADO, John, Rogers, Minnesota 55374 (US); PATTERSON, Greg, Hopkins, Minnesota 55343 (US); RICHARDS, Chris, White Bear Lake, Minnesota 55110 (US); LEE, Davis, Marietta, Georgia 30060 (US)
(74) Representative: Fish & Richardson P.C.
(86) International application number: PCT/US2016/063468
(87) International publication number: WO 2017/091648

(56) References cited:
- WO-A1-98/09812
- WO-A1-2009/152460
- WO-A1-2010/111501
- WO-A2-2011/158240
- US-A1- 2010 330 382
- US-A1- 2011 244 257

## Description

### FIELD OF THE INVENTION

The present disclosure relates to materials, devices, and/or containers for product packaging. Particularly, the present disclosure relates to compostable materials, devices, and/or containers for food packaging. More particularly, the present disclosure relates to compostable materials, devices, and/or containers having an oxygen barrier material contributing to a longer shelf life of packaged food.

### BACKGROUND OF THE INVENTION

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Product packaging, and particularly food packaging, may often include one or more non-compostable materials. In many cases, this is because materials that provide an oxygen and/or liquid barrier to keep foods or other products fresh or otherwise sealed from outside contaminants are often non-compostable. For example, single use coffee or drink containers, or "pods," are often composed of petroleum-based polymers, such as styrene, polyethylene, polypropylene, aluminum polymer laminate, and/or other non-compostable materials. Other food packaging containers may be generally compostable, but such containers often lack an oxygen and/or liquid barrier. Without an oxygen and/or liquid barrier, the food product or other product contained within the packaging may lose freshness, taste, color, or may otherwise expire or become inedible more quickly than products contained within packaging having such a barrier.

WO 98/09812 A1 describes packaging laminate for packages for liquid foods having excellent liquid- and oxygen gas barrier properties in which all included layers are biodegradable. The packaging laminate includes at least one liquid-tight layer of homo- or copolymers of monomers selected from a group consisting of lactic acid, glycol acid, lactide, glycolide, hydroxy butyric acid, hydroxy valeric acid, hydroxy caproic acid, valerolactone, butyrolactone and caprolactone, as well as an oxygen gas barrier layer of ethylene vinyl alcohol, polyvinyl alcohol, starch or starch derivatives. The oxygen gas barrier layer is preferably applied by a dispersion coating process. The layers may be laminated directly to one another or indirectly by means of interjacent adhesive layers. The packaging laminate may also include a core layer of, for example, paper or paperboard, or a biopolymer. The invention also realises a method of producing the biodegradable packaging laminate according to the invention.

WO 2009/152460 describes a biaxially oriented laminate film including a core layer including a blend of crystalline polylactic acid polymer and a minority amount of polyolefin with a compatibilizing resin which is biaxially oriented such that a matte or opaque appearance is obtained. The laminate film may further have additional layers such as a heat sealable layer disposed on one side of the core layer including an amorphous polylactic acid resin and/or a polylactic acid resin-containing layer disposed on the side of the core layer opposite the heat sealable layer, a metal layer, or combinations thereof.

WO 2011/158240 describes a biodegradable sheet prepared from biodegradable material, a process for preparing the biodegradable sheet and uses thereof. One of the disclosed uses of the biodegradable sheet is in the preparation of a flexible liquid receptacle. Disclosed also is a flexible liquid receptacle arranged as an array of several receptacle units that are attached to one another and that may be detached from one another by tearing along a perforated line created between each two receptacle units. The disclosed array may also include a hanger, thus allowing the array to be hung from any appropriate means.

US2011/244257 describes films and formulations that include recycled polylactic acid resin are described. The films and formulations include, for example, 1-10 wt % of an ethylene-acrylate copolymer. The use of the ethylene-acrylate compolymer in the polylactic acid formulations allows for recycling of PLA-based films and articles with minimum degradation, as exhibited by changes in intrinsic viscosity and color properties.

WO 2010/111501 describes metallized multi-layer biaxially oriented polylactic acid base polymer (BOPLA) films that exhibits improved barrier properties and metal adhesion. The films include a core layer including crystalline polylactic acid base polymer, a first skin layer consisting essentially of amorphous polylactic acid base polymer, and a metal layer on the first skin layer. The films may include a second skin layer consisting essentially of amorphous polylactic acid base polymer.

US 2010/330382 describes a biaxially oriented multilayer film comprising a skin layer of polyhydroxyalkanoate, a core layer of polylactic acid polymer and a sealant layer with a metal deposited upon one surface of the skin layer of polyhydroxyalkanoate polymer. This metallized, polyhydroxyalkanoate-coextruded polylactic acid film exhibits improved moisture barrier property versus a metallized, non-polyhydroxyalkanoate-coextruded polylactic acid film.

### BRIEF SUMMARY OF THE INVENTION

The invention is defined in the appended claims.

The following presents a simplified summary of one or more embodiments of the present disclosure in order to provide a basic understanding of such embodiments. This summary is not an extensive overview of all contemplated embodiments, and is intended to neither identify key or critical elements of all embodiments, nor delineate the scope of any or all embodiments.

The present disclosure, in one or more embodiments, relates to a compostable material for a food packaging container. The material have two external layers each having about 90 % to about 97 % by weight of a compostable polymeric material, an internal layer arranged between the external layers, and two bonding layers. The oxygen barrier material is configured to decrease the oxygen transmission rate of the food packaging containers. Moreover, each bonding layer is arranged between the internal layer and an external layer. Each bonding layer have a bonding agent configured to bond the internal layer with the external layers. According to the invention, the compostable polymeric material is cPLA. The oxygen barrier material may be polyglutamic acid in some embodiments. In other embodiments, the oxygen barrier material may be ethylene vinyl alcohol. Further, the oxygen barrier material may be a food contact grade material. According to the invention, each external layer may include an impact modifier and a nucleating agent.

The present disclosure, in one or more additional embodiments, relates to a compostable food packaging container. The container may have from about 84 % to about94 % by weight cPLA, from about5 % to about 15 % by weight of an oxygen barrier material, and one or more additives. In some embodiments, the container may be a beverage pod. The oxygen barrier material is either polyglutamic acid or ethylene vinyl alcohol or a food contact grade material. The one or more additives include an impact modifier and a nucleating agent. Moreover, the one or more additives may include a pigment.

The present disclosure, in one or more additional embodiments, relates to a method for producing a compostable food packaging container. The method according to the invention include extruding a first layer, extruding a second layer, and extruding a bonding layer. The first layer include about90 % to about 97 % of a compostable polymer. Further, the second layer include a compostable oxygen barrier material. The bonding layer is configured to bond the first and second layers. The compostable polymer is cPLA. The oxygen barrier material may be polyglutamic acid in some embodiments. According to the invention, the oxygen barrier material is ethylene vinyl alcohol. The first layer additionally include an impact modifier and a nucleating agent. The method additionally include passing the layers through a die and thermoforming the layers to form the food packaging container. According to the invention, the food packaging container is a beverage pod.

While multiple embodiments are disclosed, still other embodiments of the present disclosure will become apparent to those skilled in the art from the following detailed description, which shows and describes illustrative embodiments of the invention. As will be realized, the various embodiments of the present disclosure are capable of modifications in various obvious aspects, all without departing from the spirit and scope of the present disclosure. Accordingly, the drawings and detailed description are to be regarded as illustrative in nature and not restrictive.

### BRIEF DESCRIPTION OF THE DRAWINGS

While the specification concludes with claims particularly pointing out and distinctly claiming the subject matter that is regarded as forming the various embodiments of the present disclosure, it is believed that the invention will be better understood from the following description taken in conjunction with the accompanying Figures, in which:
FIG. 1 is a side view of a beverage pod of the present disclosure, according to one or more embodiments.
FIG. 2 is a close up view of a sheet material of the present disclosure, according to one or more embodiments.
FIG. 3 is a diagram of an extrusion system of the present disclosure, according to one or more embodiments.

### DETAILED DESCRIPTION

The present disclosure, in one or more embodiments, relates to food packaging containers that may be generally compostable and may provide for a suitable shelf life of the packaged food. For example, in some embodiments, a food packaging container of the present disclosure may contain between 90 % and 100 % compostable material(s) while still providing a suitable oxygen barrier. A food packaging container of the present invention have one or more oxygen barrier materials configured to maintain the freshness or shelf life of a food product within the container by improving the oxygen transmission rate (OTR) of the container. A food packaging container of the present disclosure may be, for example, a beverage pod container configured for single-use within a beverage pod machine, such as a KEURIG or other single-serve coffee machine. In some embodiments, a food packaging container may be constructed of a sheet material having one or more layers. For example, the sheet material may have an internal layer sandwiched between two external layers, and two bonding layers coupling the internal layer with each external layer. In some embodiments, the sheet material may be extruded, co-extruded, or laminated. The resulting container is compostable while still providing a suitable oxygen barrier for the packaged food.

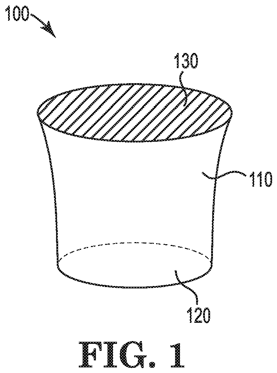

Turning now to FIG. 1, a food packaging container of the present disclosure, according to at least one embodiment, is shown. The food packaging container may be a single-use or multi-use coffee or beverage pod 100 in some embodiments (referred to collectively herein as "beverage pod"). For example, the food packaging container may be configured to hold ground or powdered coffee and/or another ground, powdered, or dehydrated beverage product. In some embodiments, the beverage pod 100 may have a generally cylindrical shape. For example, the beverage pod 100 may have a rounded or generally cylindrically shaped side portion 110 arranged between a first end portion 120 and a second end portion 130. The generally cylindrically shaped side portion 110 may narrow or taper between the second end portion 130 and the first end portion 120 in some embodiments, establishing a draft angle for easily inserting and removing the pod 100. In other embodiments, the beverage pod 100 may have an alternative shape. For example, the beverage pod 100 may have a generally cubic, spherical, or any other suitable shape. In some embodiments, the beverage pod 100 may be shaped and sized to operate with a beverage pod machine. That is, for example, the beverage pod 100 may be configured to be received in a KEURIG, NESPRESSO, or other beverage pod machine and may have a shape compatible with a receiving portion of the respective machine. The beverage pod 100 may generally have an interior surface and an exterior surface. The interior surface may be configured to contact the beverage product or other food product.

The first end portion 120 may be a bottom portion in some embodiments. The second end portion 130, opposing the bottom portion 120, may be a top portion in some embodiments. In some embodiments, the top portion 130 may include a lid. In some embodiments, the lid may be configured to be pierced or punctured so as to operate with a beverage pod machine. In other embodiments, the lid may be configured to be peeled off or otherwise removed from the beverage pod 100. The lid may be composed plastic, foil, paper, and/or any other suitable material(s). In some embodiments, the lid may include one or more compostable materials such as a compostable polymer. In other embodiments, the top portion 130 may be generally open or have an opening and, in some embodiments, may be configured to receive a lid. In some embodiments, the beverage pod 100 may have a flange arranged around the perimeter of the top portion 130, or a portion thereof. The flange may be configured to be arranged on a corresponding ledge within a beverage pod machine, for example, so as to position the pod 100 within the machine, and/or may provide for easily inserting and removing the beverage pod from the machine.

A food packaging container of the present disclosure, such as the beverage pod 100, may be composed of one or more materials. In some embodiments, a food packaging container of the present invention is composed of one or more compostable or biodegradable materials. A compostable or biodegradable material may include an organic or inorganic material configured to chemically or physically break down or decompose under aerobic and/or anaerobic conditions, such as in a municipal or industrial composting or digesting facility. In some embodiments, a food packaging container of the present disclosure may include at least 50 % by weight compostable materials. Particularly, a food packaging container of the present disclosure may include at least 75 % compostable materials. More particularly, a food packaging container of the present disclosure may contain at least 90 % compostable materials. Moreover, in at least one embodiment, a food packaging container of the present disclosure may contain at least 97 % or at least 99 % compostable materials. Additionally or alternatively, a food packaging container of the present disclosure may be composed of one or more generally non-compostable or non-biodegradable materials.

In some embodiments, a food packaging container of the present disclosure may be composed of one or more polymeric materials, and in some embodiments, one or more compostable polymeric materials. A compostable polymeric material may include a polymeric material that is compostable in accordance with American Society for Testing and Materials (ASTM) standard D6400. Some compostable polymeric materials may include polymers such as, but not limited to, polylactic acid (PLA), Polyhydroxyalkanoate (PHA), polybutylene succinate, polyethylene terephthalate, and/or other polymer materials configured to be compostable or biodegradable. A food packaging container of the present invention is composed of one or more crystalline PLA materials (cPLA), which may include PLA crystallized during extrusion, thermoforming, or another sheeting, forming, or manufacturing or conversion process. The cPLA may be crystallized to achieve a desired minimum heat deflection temperature and/or operating temperature. According to the invention PLA is crystallized to achieve a minimum heat deflection temperature of between approximately 66 °C (150 °F) and approximately 121 °C (250 °F). Particularly, the PLA may be crystallized to achieve a minimum heat deflection temperature of between approximately 79 °C (175 °F) and approximately 107 °C (225 °F). More particularly, the PLA may be crystallized to achieve a minimum heat deflection temperature of between approximately 86 °C (186 °F) and approximately 99 °C (211 °F). In some embodiments, the cPLA minimum heat deflection may be achieved, determined, or tested in accordance with ASTM standard D648. The desired minimum heat deflection for cPLA may be determined based on a desired operating temperature. For example, the PLA may be crystallized to achieve workability without deformation at an operating temperature of between approximately 60°C (140 °F) and approximately 116 °C (240 °F). Particularly, the PLA may be crystallized to achieve workability without deformation at an operating temperature of between approximately 77 °C (170 °F) and approximately 99 °C (210 °F) in some embodiments. More particularly, the PLA may be crystallized to achieve workability without deformation at an operating temperature of between approximately 82 °C (180 °F) and approximately 93 °C (200 °F).

In some embodiments, a food packaging container of the present disclosure may contain between approximately 50 % and approximately 100 % by weight of one or more polymeric materials, which may include one or more compostable polymeric materials. Particularly, in some embodiments, a food packaging container may contain between approximately 75 % and approximately 99 % of one or more polymeric materials, which may include one or more compostable polymeric materials. More particularly, a food packaging container may contain between approximately 90 % and approximately 97 % of one or more polymeric materials, which may include one or more compostable polymeric materials. In other embodiments, a food packaging container may contain between approximately 84 % and 94 % of one or more polymeric materials, which may include one or more compostable polymeric materials. In some embodiments, each of the one or more polymeric materials within a food packaging container may be a compostable polymeric material.

In some embodiments, a food packaging container of the present disclosure may contain one or more additives. Additives may be compostable or non-compostable. In some embodiments, compostable additives may include, but are not limited to, one or more impact modifiers and/or one or more nucleating agents. In some embodiments, a food packaging container of the present disclosure may contain between less than 1% and approximately 50 % by weight of one or more additives, which may include one or more compostable additives. Particularly, a food packaging container may include between approximately 1 % and approximately 30% of one or more additives, which may include one or more compostable additives. More particularly, a food packaging container may contain between approximately 3 % and approximately 10 % of one or more additives, which may include one or more compostable additives. In some embodiments, each of the one or more additive materials within a food packaging container may be a compostable additive material.

An impact modifier may be a component or material configured to increase the ductility and/or impact strength of the food storage container. An impact modifier may be compostable or non-compostable. Some compostable impact modifiers may include, but are not limited to, acetic acid ethenyl ester, homopolymer, copolymer, and vinyl acetate homopolymer. In some embodiments, a food packaging container of the present disclosure may contain between less than 1 % and approximately 50 % by weight of one or more impact modifiers, which may include one or more compostable impact modifiers. Particularly, a food packaging container may have between approximately 1 % and approximately 30 % of one or more impact modifiers, which may include one or more compostable impact modifiers. More particularly, a food packaging container may have between approximately 2 % and approximately 10 % of one or more impact modifiers, which may include one or more compostable impact modifiers. In some embodiments, each of the one or more impact modifiers within a food packaging container may be a compostable impact modifier.

A nucleating agent may be a component or material configured to accelerate the crystallization of a crystalline or semi-crystalline polymer. For example, a nucleating agent may accelerate the crystallization of PLA. A nucleating agent may be compostable or non-compostable. Some compostable nucleating agents may include, but are not limited to, ethylene bis stearamide, aromatic sulfonate derivative was, and talc. In some embodiments, a food packaging container of the present disclosure may include between less than 1 % and approximately 10 % by weight of one or more nucleating agents, which may include one or more compostable nucleating agents. Particularly, a food packaging container may include between approximately 0.1% and approximately 5 % of one or more nucleating agents, which may include one or more compostable nucleating agents. More particularly, in some embodiments, a food packaging container may include between approximately 0.25 % and approximately 1 % of one or more nucleating agents, which may include one or more compostable nucleating agents. In some embodiments, each of the one or more nucleating agents within a food packaging container may be a compostable nucleating agent.

Additionally or alternatively, a food packaging container of the present disclosure may have one or more other compostable or non-compostable additives or other materials. For example, in some embodiments, a food packaging container of the present disclosure may have a pigment for affecting the color of the food packaging container. In some embodiments, a food packaging container of the present disclosure may have between less than 1 % and approximately 10 % by weight of one or more pigments or other additives. Particularly, a food packaging container may have between less than 1 % and approximately 5 % of one or more pigments or other additives. More particularly, in some embodiments, a food packaging container may have between approximately 0.01 % and approximately 1 % of one or more pigments or other additives.

In some embodiments, a food packaging container of the present disclosure may have one or more oxygen barrier materials. An oxygen barrier material may be a component or material configured to improve an oxygen transmission rate (OTR) of the container. By decreasing the OTR of a food packaging container, the one or more oxygen barrier materials may increase the container's ability to maintain food freshness, shelf life, or longevity. An oxygen barrier material may be compostable or non-compostable. Examples of compostable oxygen barrier materials include, but are not limited to, ethylene vinyl alcohol (EVOH), polyglutamic acid, and polyglycolic acid. In at least one embodiment, the oxygen barrier material may include G polymer OKS-8049P. In some embodiments, a food packaging container of the present disclosure may have between approximately 1 % and approximately 50 % by weight of one or more oxygen barrier materials, which may include one or more compostable oxygen barrier materials. Particularly, a food packaging container may have between approximately 2.5 % and approximately 32.5 % of one or more oxygen barrier materials, which may include one or more compostable oxygen barrier materials. More particularly, a food packaging container may include between approximately 5 % and approximately 15 % of one or more oxygen barrier materials, which may include one or more compostable oxygen barrier materials. In some embodiments, each of the one or more oxygen barrier materials within a food packaging container may be a compostable oxygen barrier material.

In some embodiments, a food packaging container of the present disclosure, or a portion thereof, may be formed of a single structural component. For example, the food packaging container may be thermoformed, vacuum formed, from a sheet or sheets of material in some embodiments. In other embodiments, the food packaging container may be formed by injection molding or other suitable methods.

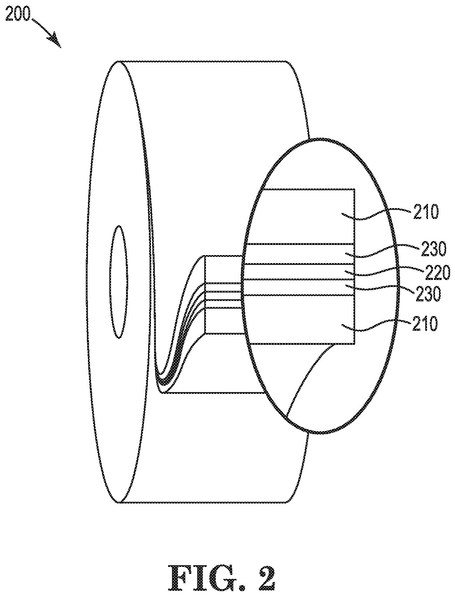

FIG. 2 illustrates a sheet material 200 from which a food packaging container, or a portion thereof, of the present disclosure may be formed by way of thermoforming, for example, according to at least one embodiment. As shown, the sheet material 200 may have one or more material layers. For example, the sheet material 200 may have five material layers in some embodiments. In other embodiments, the sheet material 200 may have 1, 2, 3, 4, 6, or any other suitable number of material layers. In some embodiments, the sheet material may have one or more exterior layers 210, one or more interior layers 220, and one or more bonding layers 230. For example, as shown in FIG. 2, the sheet material 200 may have an interior layer 220 sandwiched between two bonding layers 230, the interior layer and bonding layers further sandwiched between two exterior layers 210. The sheet material 200 may generally have any suitable thickness. For example, in some embodiments, the sheet material 200 may have a thickness of between less than 0.0254 cm (0.01 inches) and approximately 0.508 cm (0.2 inches). Particularly, the sheet material 200 may have a thickness of between approximately 0.0254 cm (0.01 inch) and 0.254 cm (0.1 inches). More particularly, the sheet material 200 may have a thickness of between approximately 0.0635 cm (0.025 inches) and approximately 0.0889 cm (0.035 inches) in some embodiments. Individual layers of the sheet material 200 may have any suitable thickness.

The one or more exterior layers 210 may generally be arranged on an outer or exposed surface of the sheet material 200. In this way, the one or more exterior layers 210 may be arranged on an inner surface and/or outer surface of a formed food packaging container. In some embodiments, the exterior layer(s) 210 may include one or more food contact grade materials, such that an exterior layer may be arranged on an inner surface of the food packaging container where it may contact the food product. In some embodiments, the exterior layer(s) 210 include one or more compostable materials. In some embodiments, the exterior layer(s) 210 may include a compostable polymer, such as cPLA. The exterior layer(s) 210 may additionally include one or more compostable or non-compostable additives, such as one or more impact modifiers, one or more nucleating agents, and/or one or more pigments. In some embodiments, the exterior layer(s) 210 may account for between approximately 50 % and approximately 100 % by weight of the of the sheet material 200. Particularly, the exterior layer(s) 210 may account for between approximately 67 % and approximately 97 % by weight of the sheet material 200 in some embodiments. More particularly, the exterior layer(s) 210 may account for between approximately 84 % and approximately 94 % by weight of the sheet material 200 in some embodiments.

The one or more interior layers 220 may be generally arranged on an inner or generally enclosed surface of the sheet material 200. In some embodiments, the one or more interior layers 220 may be an oxygen barrier layer having one or more oxygen barrier materials, such as ethylene vinyl alcohol, polyglutamic acid, or polyglycolic acid. The interior layer(s) 220 may include one or more compostable materials in some embodiments. The interior layer(s) 220 may account for between less than 1% and approximately 50 % by weight of the sheet material 200 in some embodiments. Particularly, the interior layer(s) 220 may account for between approximately 2.5 % and approximately 32.5 % by weight of the sheet material 200. More particularly, the interior layer(s) 220 may account for between approximately 5 % and approximately 15 % of the sheet material 200 in some embodiments.

One or more bonding layers 230 may be arranged between an interior layer 220 and an exterior layer 210, and may be configured to bond the two layers together. The bonding layer 230 may include any suitable bonding or adhesive material(s). In some embodiments, the one or more bonding or adhesive materials may be compostable. For example, in at least one embodiment, the bonding material may include NIPPON GOHSEI BTR-8002P or similar biodegradable resins. The bonding layer(s) 230 may account for between less than 1 % and approximately 15 % by weight of the sheet material 200 in some embodiments. Particularly, the bonding layer(s) 230 may account for between approximately 0.2 5% and approximately 9.5 % by weight of the sheet material 200. More particularly, the bonding layer(s) 230 may account for between approximately 0.5 % and approximately 3 % by weight of the sheet material 200 in some embodiments.

In some embodiments a lid or cap for a food packaging container may include one or more layers of material. For example, the lid or cap may include one or more exterior layers and one or more reinforcing layers. In some embodiments, the lid or cap may include a reinforcing layer sandwiched between two exterior layers. The exterior layer(s) may include one or more compostable or non-compostable polymer materials, such as PLA or cPLA, for example. In some embodiments, the exterior layer(s) may be similar to the exterior layers 210 described above with respect to the sheet material 200. The reinforcing layer may include one or more organic materials, such as one or more paper materials in some embodiments.

### EXAMPLES

The following examples are illustrative sheet materials having one or more layers and having desirable mechanical, thermal, and oxygen barrier properties for a compostable food packaging container, such as a beverage pod that may be used for cold and/or hot water applications.

### Example 1: Single layer compostable food packaging container

**Table 1: Example Composition**

| **Layer** | **% by Weight of Sheet Material** | **Material** | **Name** | **% by Weight of Layer** |
|---|---|---|---|---|
| 1 | 100 % | cPLA | NatureWork Ingeo4032D | 96% |
| | | Impact Modifier | Vinyl acetate homopolymer Wacker master batch Vinnex 2514C | 3 % |
| | | Nucleating Agent | Ethylene bis stearamide sulkano master batch na S516 | 0.50 % |

### Example 2: Multi-layer compostable food packaging container

**Table 2: Example 2 Compositions**

| **Layer** | **% by Weight of Sheet Material** | **Material** | **Name** | **% by Weight of Layer** |
|---|---|---|---|---|
| 1 | 90% | cPLA | NatureWork Ingeo4032D | 96% |
| | | Impact Modifier | Vinyl acetate homopolymer Wacker master batch Vinnex 2514C | 3 % |
| | | Nucleating Agent | Ethylene bis stearamide sulkano master batch na S516 | 0.50 % |
| | | Pigment | Grey (or other suitable color) | 0.20 % |
| 2 | 10% | Oxygen Barrier | Polyglycolic acid | 100 % |

### Example 3: Multi-layer compostable food packaging container

**Table 2: Example 2 Compositions**

| **Layer** | **% by Weight of Sheet Material** | **Material** | **Name** | **% by Weight of Layer** |
|---|---|---|---|---|
| 1 | 87% | cPLA | NatureWork Ingeo4032D | 96% |
| | | Impact Modifier | Vinyl acetate homopolymer Wacker master batch Vinnex 2514C | 3 % |
| | | Nucleating Agent | Ethylene bis stearamide sulkano master batch na S516 | 0.50 % |
| | | Pigment | Grey (or other suitable color) | 0.20 % |
| 3 | 3 % | Bonding Material | -- | 100 % |
| 2 | 10 % | Oxygen Barrier | EVOH | 100 % |

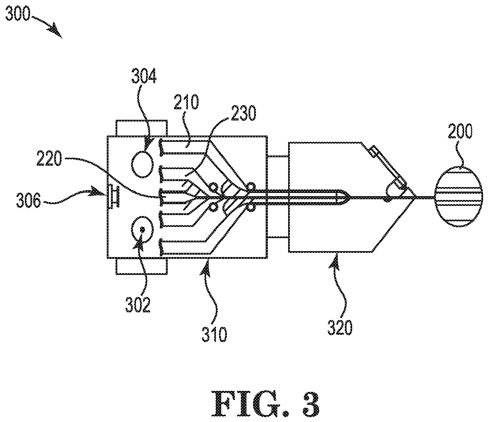

A sheet material of the present disclosure may be formed by any suitable process or processes. In some embodiments, the sheet material may be formed by extrusion or co-extrusion, for example. In other embodiments, the sheet material may be formed by lamination process or any other suitable process. FIG. 3 illustrates an example of an extrusion system 300 for extruding a sheet material of the present disclosure, such as sheet material 200, according to at least one embodiment. The extrusion system 300 may have one or more extruders 302, 304, 306; a feed block 310; and a die 320 in some embodiments.

The one or more extruders 302, 304, 306 may be configured to extrude the one or more molten layers of the sheet material 200. For example, a first extruder 302 may extrude one or more layers of material, such as one or more external layers 210; a second extruder 304 may extrude one or more layers of material, such as one or more bonding layers 230; and a third extruder 306 may extrude one or more layers of material, such as one or more internal layers 220; and a. The one or more extruders 302, 304, 306 may be configured to minimize sharp bends or hang up areas in the melt flow of the materials. Each extruder 302, 304, 306 may be brought to a desired operating temperature. For example, each extruder 302, 304, 306 may be brought to an operating temperature of between approximately 149 °C (300 °F) and approximately 260 °C (500 °F).

In some embodiments, one or more extruders may heat material to be extruded using a plurality of heaters. For example, one or more extruders may have a plurality of heating zones arranged along a barrel length of the extruder. Each heating zone may span a particular length along the barrel length of the extruder and may include a heater configured to heat material(s) within the extruder to a desired temperature or temperature range. In some embodiments, each extruder 302, 304, 306 may have five heating zones. In other embodiments, the extruders 302, 304, 306, may each have any other suitable number of heating zones. In some embodiments, a first heating zone ("Zone 1") may be arranged at or near an end of the extruder where material(s) enter the extruder barrel for extrusion. Another heating zone, which may be a fifth heating zone in some embodiments ("Zone 5") may be arranged at or near an opposing end of the extruder where material(s) are extruded from the extruder. Other heating zones may be arranged between Zones 1 and 5. Below is a table showing operating temperature ranges for each of extruders 302, 304, and 306, according to one or more embodiments, where each extruder has five heating zones.

| | Extruder 302 | Extruder 304 | Extruder 306 |
|---|---|---|---|
| Zone 1 Operating Temperature | 174-185 °C (345-365 °F) | 193-204 °C (380-400 °F) | 193-204 °C (380-400 °F) |
| Zone 2 Operating Temperature | 185-196 °C (365-385 °F) | 204-216 °C (400-420 °F) | 204-216 °C (400-420 °F) |
| Zone 3 Operating Temperature | 193-204 °C (380-400 °F) | 213-224 °C (415-435 °F) | 214-226 °C (418-438 °F) |
| Zone 4 Operating Temperature | 210-221 °C (410-430 °F) | 214-226 °C (418-438 °F) | 216-227 °C (420-440 °F) |
| Zone 5 Operating Temperature | 216-227 °C (420-440 °F) | 216-227 °C (420-440 °F) | 216-227 °C (420-440 °F) |

More particularly, in some embodiments, the extruders 302, 304, 306 may have the following operating temperature ranges for each of five heating zones:

| | Extruder 302 | Extruder 304 | Extruder 306 |
|---|---|---|---|
| Zone 1 Operating Temperature | 177-182 °C (350-360 °F) | 196-257 °C (385-495 °F) | 196-257 °C (385-495 °F) |
| Zone 2 Operating Temperature | 188-193 °C (370-380 °F) | 207-213 °C (405-415 °F) | 207-213 °C (405-415 °F) |
| Zone 3 Operating Temperature | 196-257 °C (385-495 °F) | 216-221 °C (420-430 °F) | 217-223 °C (423-433 °F) |
| Zone 4 Operating Temperature | 213-218 °C (415-425 °F) | 217-223 °C (423-433 °F) | 218-224 °C (425-435 °F) |
| Zone 5 Operating Temperature | 218-224 °C (425-435 °F) | 218-224 °C (425-435 °F) | 218-224 °C (425-435 °F) |

Even more particularly, in some embodiments, the extruder 302 may have operating temperatures of approximately 179 °C (355 °F), 191 °C (375 °F), 199 °C (390 °F), 216 °C (420 °F), and 221 °C (430 °F) at Zones 1, 2, 3, 4, and 5, respectively; extruder 304 may have operating temperatures of approximately 199 °C (390 °F), 210 °C (410 °F), 218 °C (425 °F), 220 °C (428 °F), and 221 °C (430 °F) at Zones 1, 2, 3, 4, and 5, respectively; and extruder 306 may have operating temperatures of approximately 199 °C (390 °F), 210 °C (410 °F), 220 °C (428 °F), 221 °C (430 °F), and 221 °C (430 °F) at Zones 1, 2, 3, 4 and 5, respectively. pIn other embodiments, each heating zone for each extruder 302, 304, 306 may have alternative operating temperatures. Generally, the progression of heating zones 1 through 5, between the entrance and exit points of each extruder, may allow for gradual heating of the material(s) within the extruders. Together, the heating zones may be configured to heat the material(s) within the extruders to a molten state without degrading the material(s). Degradation may occur, for example as a result of frictional heat caused by overheating of the material(s). By minimizing degradation, the material(s) within each extruder may achieve a relatively stable melt state.

In some embodiments, multiple extruders may be initiated at different times. For example, the melt flow of the first extruder 302 may be initiated. Once flow from the first extruder 302 is generally thermally stable, the second extruder 304 may be initiated. Once flow from the second extruder 304 is generally thermally stable, the third extruder 306 may be initiated. Timing one or more extruders in this way such that general thermal stability may be achieved in one extruder before initiating another extruder, may provide for reduced scrap or wasted materials.

The extruder(s) 302, 304, 306 may collect at a melt distribution feed block 310. The feed block 310 may arrange the materials extruded from the extruder(s) into layers. For example, the feed block 310 may arrange the material extruded from the first extruder 302 into two external layers 210; the feed block may arrange the material extruded from the second extruder 304 into two bonding layers 230; and the feed block may arrange the material extruded from the third extruder 306 into an internal layer 220. Moreover, the feed block 310 may converge the layers and direct them toward a die 320. The die 320 may generally compress and/or shape the extruded layers into a sheet material 200.

Food packaging containers, materials and compositions for food packaging containers, and methods for making the same have been described. It may be appreciated that a food packaging container, material, or composition of the present disclosure may be generally compostable. For example, a container, material, or composition of the present disclosure may be composed of at least 50 % compostable materials in some embodiments. Particularly, in some embodiments, a container, material, or composition of the present disclosure may be composed of at least 75 % compostable materials. More particularly, a container, material, or composition of the present disclosure may be composed of at least 99 % compostable materials. In this way, the containers, materials, and compositions described herein may be particularly applicable with respect to single-use food packaging containers or other single-use containers. By providing single-use food packaging containers for particular products, consumers of such products may produce less landfill waste or less harmful waste.

## Claims

1. A compostable material for a food packaging container, the material comprising:
two external layers comprising 90 % to 97 % by weight of a compostable polymeric material, wherein the compostable polymeric material is cPLA and wherein the external layers comprise a nucleating agent;
an internal layer arranged between the external layers, the internal layer comprising an oxygen barrier material configured to decrease the oxygen transmission rate of the food packaging container; and
two bonding layers, each bonding layer arranged between the internal layer and an external layer, the bonding layers comprising a bonding agent configured to bond the internal layer with the external layers.

2. The material of claim 1, wherein the oxygen barrier material is either:
a) polyglutamic acid; or
b) ethylene vinyl alcohol; or
c) food contact grade material.

3. The material of claim 1, wherein the material has a minimum heat deflection temperature of between 66 °C (150°F) and 121 °C (250 °F).

4. The material of claim 1, wherein the external layers further comprise an impact modifier.

5. A method for producing a compostable food packaging container, the method comprising the steps of:
extruding a first layer, the first layer comprising 90 % to 97 % of a compostable polymer, wherein the compostable polymeric material is cPLA and wherein the first layer comprises a nucleating agent;
extruding a second layer, the second layer comprising a compostable oxygen barrier material; and
extruding a bonding layer, the bonding layer configured to bond the first and second layers together.

6. The method of claim 5, wherein the oxygen barrier is either:
a) polyglutamic acid; or
b) ethylene vinyl alcohol.

7. The method of claim 5, wherein the first layer further comprises an impact modifier.

8. The method of claim 5, further comprising:
passing the layers through a die; and
thermoforming the layers to form the food packaging container.

9. The method of claim 8, wherein the food packaging container is a beverage pod.

10. The method of claim 8, wherein the food packaging container has a minimum heat deflection temperature of between 66 °C (150 °F) and 121 °C (250 °F).

## Patentansprüche

1. Kompostierbares Material für einen Nahrungsmittelverpackungsbehälter, wobei das Material umfasst:
zwei äußere Schichten, die 90 Gew.% bis 97 Gew.% eines kompostierbaren polymeren Materials umfassen, wobei das kompostierbare polymere Material cPLA ist, und wobei die äußeren Schichten ein Nukleierungsmittel umfassen;
eine innere Schicht, die zwischen den äußeren Schichten angeordnet ist, wobei die innere Schicht ein Sauerstoffbarrierematerial umfasst, das ausgestaltet ist, um die Sauerstoffdurchlässigkeit des Nahrungsmittelverpackungsbehälters zu verringern; und
zwei Bindeschichten, wobei jede Bindeschicht zwischen der inneren Schicht und einer äußeren Schicht angeordnet ist, wobei die Bindeschichten ein Bindemittel umfassen, das ausgestaltet ist, um die innere Schicht an die äußeren Schichten zu binden.

2. Material nach Anspruch 1, wobei das Sauerstoffbarrierematerial entweder
a) Polyglutaminsäure oder
b) Ethylen-Vinylalkohol oder
c) Material von Nahrungsmittelkontaktqualität ist.

3. Material nach Anspruch 1, wobei das Material eine Mindestwärmeformbeständigkeitstemperatur zwischen 66 °C (150 °F) und 121 °C (250 °F) aufweist.

4. Material nach Anspruch 1, wobei die äußeren Schichten des Weiteren einen Schlagzähmacher umfassen.

5. Verfahren zum Produzieren eines kompostierbaren Nahrungsmittelverpackungsbehälters, wobei das Verfahren die Schritte umfasst:
Extrudieren einer ersten Schicht, wobei die erste Schicht 90 % bis 97 % eines kompostierbaren Polymers umfasst, wobei das kompostierbare polymere Material cPLA ist, und wobei die erste Schicht ein Nukleierungsmittel umfassen;
Extrudieren einer zweiten Schicht, wobei die zweite Schicht ein kompostierbares Sauerstoffbarrierematerial umfasst; und
Extrudieren einer Bindeschicht, wobei die Bindeschicht ausgestaltet ist, um die ersten und die zweiten Schichten aneinander zu binden.

6. Verfahren nach Anspruch 5, wobei das Sauerstoffbarrierematerial entweder
a) Polyglutaminsäure oder
b) Ethylen-Vinylalkohol ist.

7. Verfahren nach Anspruch 5, wobei die erste Schicht des Weiteren einen Schlagzähmacher umfasst.

8. Verfahren nach Anspruch 5, des Weiteren umfassend:
Führen der Schichten durch eine Düse; und
Thermoformen der Schichten, um den Nahrungsmittelverpackungsbehälter zu bilden.

9. Verfahren nach Anspruch 8, wobei der Nahrungsmittelbehälter eine Getränkekapsel ist.

10. Verfahren nach Anspruch 8, wobei der Nahrungsmittelverpackungsbehälter eine Mindestwärmeformbeständigkeitstemperatur zwischen 66 °C (150 °F) und 121 °C (250 °F) aufweist.

## Revendications

1. Matériau compostable pour un récipient d'emballage alimentaire, le matériau comprenant :
deux couches externes comprenant 90 % à 97 % en poids d'un matériau polymère compostable, le matériau polymère compostable étant le cPLA et les couches externes comprenant un agent de nucléation ;
une couche interne disposée entre les couches externes, la couche interne comprenant un matériau faisant barrière à l'oxygène configuré pour réduire le taux de transmission d'oxygène du récipient d'emballage alimentaire ; et
deux couches de liaison, chaque couche de liaison étant disposée entre la couche interne et une couche externe, les couches de liaison comprenant un liant configuré pour lier la couche interne aux couches externes.

2. Matériau de la revendication 1, le matériau faisant barrière à l'oxygène étant :
a) l'acide polyglutamique ; ou
b) l'éthylène-alcool vinylique ; ou
c) un matériau de qualité alimentaire.

3. Matériau de la revendication 1, le matériau ayant une température minimale de fléchissement sous charge comprise entre 66 °C (150 °F) et 121 °C (250 °F).

4. Matériau de la revendication 1, les couches externes comprenant en outre un modificateur de résistance aux chocs.

5. Procédé de production d'un récipient d'emballage alimentaire compostable, le procédé comprenant les étapes suivantes :
extrusion d'une première couche, la première couche comprenant 90 % à 97 % d'un polymère compostable, le matériau polymère compostable étant le cPLA et la première couche comprenant un agent de nucléation ;
extrusion d'une deuxième couche, la deuxième couche comprenant un matériau faisant barrière à l'oxygène compostable ; et
extrusion d'une couche de liaison, la couche de liaison étant configurée pour lier les première et deuxième couches ensemble.

6. Procédé de la revendication 5, la barrière à l'oxygène étant :
a) l'acide polyglutamique ; ou
b) l'éthylène-alcool vinylique.

7. Procédé de la revendication 5, la première couche comprenant en outre un modificateur de résistance aux chocs.

8. Procédé de la revendication 5, comprenant en outre :
le passage des couches à travers une filière ; et
le thermoformage des couches pour former le récipient d'emballage alimentaire.

9. Procédé de la revendication 8, le récipient d'emballage alimentaire étant une dosette de boisson.

10. Procédé de la revendication 8, le récipient d'emballage alimentaire ayant une température minimale de fléchissement sous charge comprise entre 66 °C (150 °F) et 121 °C (250 °F).
